# EUROPÄISCHE PATENTSCHRIFT

(11) **EP 1 407 498 B1**
(45) Veröffentlichungstag und Bekanntmachung des Hinweises auf die Patenterteilung: **15.06.2005**
(21) Anmeldenummer: 02753005.4
(22) Anmeldetag: 10.07.2002
(51) Int. Cl.: H01L 41/09, F15B 15/02

(54) **AKTORSYSTEM**
ACTUATOR SYSTEM
SYSTEME D'ACTIONNEURS

(30) Priorität: 17.07.2001 DE 10134737
(43) Veröffentlichungstag der Anmeldung: 14.04.2004
(73) Patentinhaber: EADS Deutschland GmbH, 85521 Ottobrunn (DE)
(72) Erfinder: STORM, Stefan, 85716 Unterschleissheim (DE)
(86) Internationale Anmeldenummer: PCT/DE2002/002517
(87) Internationale Veröffentlichungsnummer: WO 2003/009402

(56) Entgegenhaltungen:
- EP-A- 0 297 574
- DE-A- 19 742 205
- DE-C- 19 961 068
- PATENT ABSTRACTS OF JAPAN vol. 009, no. 220 (E-341), 6. September 1985 (1985-09-06) & JP 60 077684 A (ASAHI OKUMA IND CO LTD), 2. Mai 1985 (1985-05-02) -& JP 60 077684 A (ASAHI OKUMA IND CO LTD) 2. Mai 1985 (1985-05-02)
- PATENT ABSTRACTS OF JAPAN vol. 010, no. 077 (M-464), 26. März 1986 (1986-03-26) -& JP 60 220255 A (FUJITA CORP), 2. November 1985 (1985-11-02)
- PATENT ABSTRACTS OF JAPAN vol. 018, no. 359 (E-1574), 6. Juli 1994 (1994-07-06) & JP 06 097529 A (AKUTA TOMOHIKO), 8. April 1994 (1994-04-08) -& JP 06 097529 A (AKUTA TOMOHIKO) 8. April 1994 (1994-04-08)

## Beschreibung

Die Erfindung betrifft ein Aktorsystem, bestehend aus mehreren zusammenwirkenden Aktoren, gemäß dem Oberbegriff des Patentanspruchs 1.

Bekannte Aktorsysteme mit mehreren zusammenwirkenden Aktoren führen entweder lineare Stellbewegungen (DE-C2-196 44 161) oder rotierende Stellbewegungen (EP-A1-646975) aus.

Zudem ist aus JP 60-077684 A ein Aktuator bekannt, der eine geschlossene, vieleckige Anordnung von Piezoaktuatoren aufweist. Durch wechselseitiges Betätigen gegenüberliegender Aktuatoren wird eine lineare Verschiebung eines entsprechenden Abtriebs bewirkt.

Der Erfindung liegt die Aufgabe zugrunde ein Aktorsystem zu schaffen, das auch kombinierte Stellbewegungen ausführt, die sich aus linearen und rotierenden Bewegungskomponenten zusammensetzen.

Diese Aufgabe wird erfindungsgemäß durch die Merkmale des Patentanspruchs 1 gelöst. Weiterbildungen der Erfindung sind in den Unteransprüchen angegeben.

Das erfindungsgemäße Aktorsystem besitzt drei Freiheitsgrade; zwei für lineare Stellbewegungen - eine in der x- und eine in der y-Achse einer x-y-Ebene - und einen für eine rotierende Stellbewegung um die z-Achse, die als Normalvektor im Ursprung des x-y-Systems steht.

Alle Bewegungskomponenten des erfindungsgemäßen Aktorsystems lassen sich beliebig kombinieren und spektral überlagern. Dadurch können in vorteilhafter Weise auch Drehbewegungen um beliebige Drehachsen parallel zur z-Achse ausgeführt werden.

Außer der Funktion eines Stellers kann das Aktorsystem in Kombination mit einer angekoppelten Trägheitsmasse als adaptiver Schwingungstilger - auch für drehende Systeme -, als Inertiatschwinger oder als Sensor eingesetzt werden.

Das erfindungsgemäße Aktorsystem hat den Vorteil, dass die Lehrlaufdehnung und die Blockierkraft individuell auf den jeweiligen Anwendungsfall angepasst werden kann.

Weiterhin weist das erfindungsgemäße Aktorssystem eine kompakte Bauform auf und besitzt aufgrund der Anordnung und der Art der elektrischen Ansteuerung der Aktoren die Vorzüge eines Gegenspielersystems; wie z. B. einen temperaturkompensierten und linearisierten Aktorhub. Weitere Vorteile sind eine beliebig einstellbare, mechanische Vorspannung der Aktoren und die Vermeidung von Kraft-Wege-Vedusten, die in bekannten Systemen mit mechanischen Vorspannfedern auftreten.

Bei der Wahl einer geeigneten Winkelgeometrie für das Aktorsystem lassen sich bei hoher Dynamik und sehr gutem Wirkungsgrad geometriebedingte Verstärkungen oder Abschwächungen bei den initiierten linearen und/oder rotierenden Stellbewegungen erzielen. Dazu muss von einer 90°-Winkelanordnung der Aktoren abgewichen werden.

Beim Betrieb des erfindungsgemäßen Aktorsystems ändert sich die Kräfteaufteilung und somit das Vorspannniveau der einzelnen Aktoren. Dieser Effekt vergrößert vorteilhaft die geometrische Übersetzung des erfindungsgemäßen Aktorsystems. Die mechanische Vorspannung der positiv angesteuerten Aktoren reduziert sich und die Aktoren können sich dadurch zusätzlich strecken. Die in negativer Richtung angesteuerten Aktoren erfahren eine Erhöhung der mechanischen Vorspannung und somit eine zusätzliche Verkürzung. Dieses, wie eine negative Laststeifigkeit wirkende, Verhalten des erfindungsgemäßen Aktorsystems kann vorteilhaft den bei Piezoaktoren systembedingten geringen Aktorhub kompensieren.

Die bewegten Massen des erfindungsgemäßen Aktorsystems können sehr klein gehalten werden; wodurch eine hohe Dynamik möglich ist.

Anhand der Zeichnung werden Ausführungsbeispiele der Erfindung nachstehend näher erläutert.
Fig. 1 zeigt ein erfindungsgemäßes Aktorsystem, das optional als ein Schwingungstilger ausgebildet ist,
Fig. 2 zeigt die möglichen Bewegungskomponenten des erfindungsgemäßen Aktorsystems,
Fig. 3 zeigt das erfindungsgemäße Aktorsystem in einer allgemeinen Ausführungsform,
Fig. 4a bis Fig. 4f zeigen weitere Ausführungsvarianten des Aktorsystems,
Fig. 5 zeigt ein Aktorsystem mit unterschiedlich ausgebildeten Aktorpaaren,
Fig. 6 und Fig. 7 zeigen jeweils ein Aktorsystem, bei dem die Aktoren rotationssymmetrisch um eine Abtriebsachse angeordnet sind,
Fig. 8 zeigt eine elektrische Steuerschaltung für ein Aktorsystem, das als ein Gegenspieler eingesetzt ist und
Fig. 9 zeigt eine konstruktive Ausführung des Aktorsystems, die als ein Steller mit geometrieverstärkter Stellbewegung wirkt.

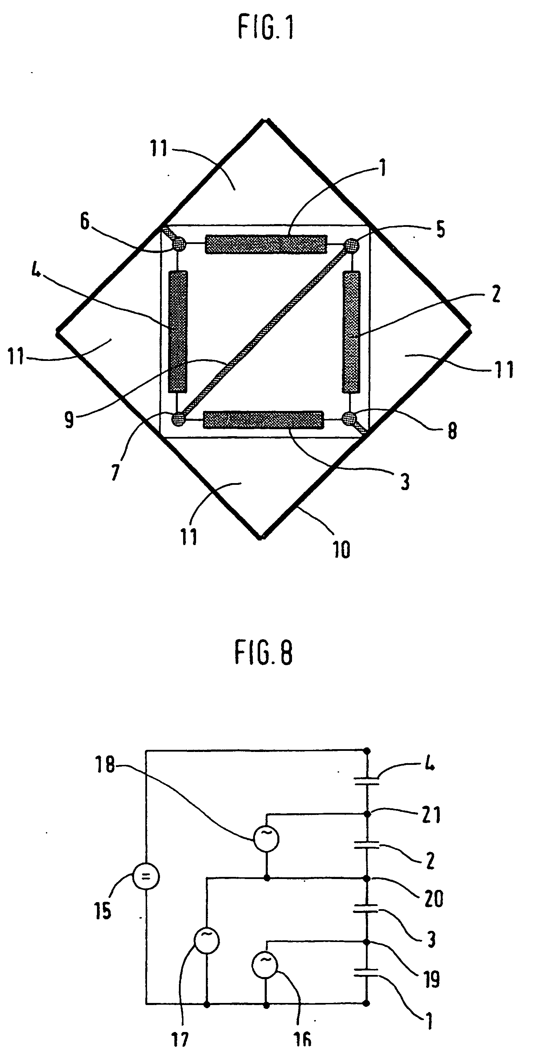

Das in Fig. 1 gezeigte Aktorsystem besteht aus vier Aktoren 1 bis 4, vier Eckverbindungen 5 bis 8, zwei starren Verbindungen 9,10 und an das Aktorsystem mechanisch angekoppelte Trägheitsmassen 11.

Die vier Aktoren 1 bis 4 sind in ihren Abmessungen und Stelleigenschaften gleichartig ausgelegt. Sie sind mit ihren Endpunkten über die Eckverbindungen 5 bis 8 derart miteinander winklig verbunden, dass sie eine geschlossene viereckige Anordnung bilden. Die gegenüberliegenden Eckverbindungen 5 und 7 sowie 6 und 8 des Aktorsystems sind jeweils mittels starren Verbindungen 9,10 auf konstantem Abstand zueinander gehalten; beispielsweise mittels einer Stange zwischen den Eckverbindungen 5 und 7 oder mittels eines die Aktoranordnung umgebenden äußeren Rahmens, der mit den Eckverbindungen 6 und 8 verbunden ist.

Alternativ könnten auch zwischen beiden gegenüberliegenden Eckverbindungen nur Stangen oder nur äußere Rahmen eingesetzt sein. Entscheidend ist, dass die gegenüberliegenden Eckverbindungen immer auf konstantem Abstand zueinander gehalten sind und dass die dafür verwendeten Mittel gegeneinander frei beweglich sind. Anstelle des äußeren Rahmens, der in Fig.1 beispielhaft als geschlossenes viereckiges Gebilde gezeigt ist, könnte auch ein beliebiges, rahmenähnliches Gebilde Verwendung finden, das zwei Eckverbindungen auf konstantem Abstand halten kann; z.B. ein halber Rahmen oder beliebige, äußere Stützpunkte, mit denen die entsprechenden Eckverbindungen verbunden sind.

Die Eckverbindungen 5 bis 8 können als Gelenkverbindungen ausgelegt sein, an denen während des Aktorbetriebes die Winkel zwischen den Aktoren variieren können. Gelenkige Eckverbindungen sind aber keine Voraussetzung für die erfindungsgemäße Lösung; sie ist grundsätzlich auch mit starr gewinkelten Eckverbindungen ausführbar. Die Mittel zur Einhaltung der konstanten Abstände - Stangen oder Rahmen - sind gelenkig mit den jeweiligen Eckverbindungen verbunden.

Das Aktorsystem besitzt zwei Abtriebe, wobei jeweils die beiden, auf konstantem Abstand gehaltenen Eckverbindungen die Abtriebspunkte für einen Abtrieb bilden.

Optional kann über eine entsprechende Dimensionierung der konstant gehaltenen Abstände zwischen den Eckverbindungen eine mechanische Vorspannung auf die Aktoren 1 bis 4 ausgeübt werden, was bei bestimmten Aktoren, die nicht auf Zug belastet werden dürfen, erforderlich ist; z. B. bei einer Verwendung von Piezostapel-Aktoren.

Als Aktoren 1 bis 4 können außer den vorgenannten Piezostapel-Aktoren beliebige elektrisch steuerbare Aktoren mit mechanischen Stellbewegungen Verwendung finden; z. B. Piezofaser -Aktoren oder pneumatisch wirkende Aktoren.

Da das in Fig.1 gezeigte Aktorsystem optional als Schwingungstilger ausgebildet ist, sind an den Rahmen, jeweils in den Ecken des Rahmens, zusätzlich Trägheitsmassen 11 mechanisch angekoppelt. Ohne diese Ankopplung der Trägheitsmassen würde mit dem vorangehend beschriebenen System ein normales Aktorsystem mit Abtrieben für Stellbewegungen vorliegen.

Die Form und Anbindung der Trägheitsmassen 11 ist abweichend von der hier gezeigten Ausführungsart alternativ gestaltbar und ist dadurch an konstruktive Merkmale des Schwingungstilgers anpassbar. Die Trägheitsmassen 11 könnten beispielsweise auch alternativ an die Stange oder an beide Abtriebe - an die Stange und an den Rahmen - angekoppelt sein.

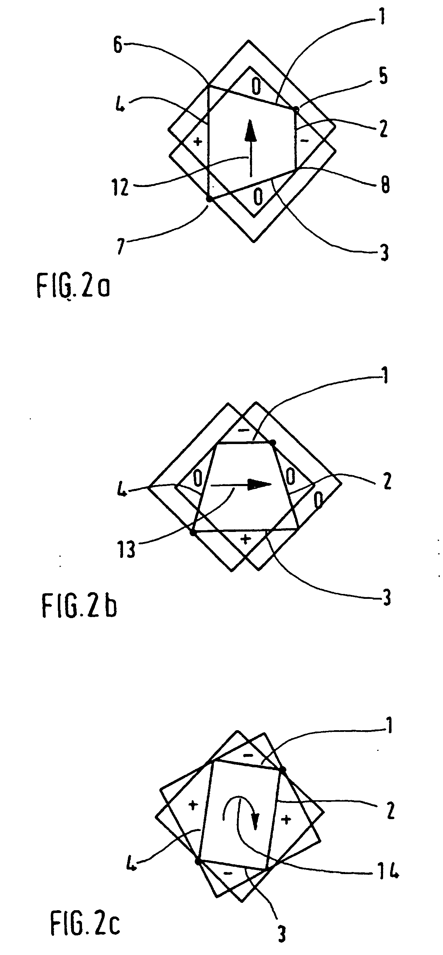

Fig. 2a zeigt das Aktorsystem beim Ausführen einer linearen Bewegungskomponente in der x-y-Ebene des Aktorsystems; das ist die Ebene in der die Aktoren 1-4 angeordnet sind. Die Aktoren 1 bis 4 sind elektrisch so angesteuert, dass Aktor 2 gegenüber einem seiner mechanischen Vorspannung entsprechenden mechanischen Offsetwert eine Stauchung und der gegenüberliegende Aktor 4 eine Dehnung aufweist. Die sich gegenüberliegenden Aktoren 1 und 3 sind elektrisch so angesteuert, dass gegenüber ihrem mechanischen Offsetwert weder eine Stauchung noch eine Dehnung auftritt. In Fig.2a und den nachfolgenden Figuren 2b und 2c ist eine Dehnung mit +, eine Stauchung mit - und eine neutrale Ansteuerung der Aktoren mit 0 gekennzeichnet.

Bei der vorangehend beschriebenen Ansteuerung der Aktoren bleiben die Abstände zwischen den Eckpunkten 5 und 7 und zwischen den Eckpunkten 6 und 8 erzwungenermaßen konstant; wegen der Wirkung der starren Verbindungen 9 und 10.

Das - wie vorangehend beschrieben - angesteuerte Aktorsystem führt mit seinen beiden Abtrieben eine sich überiagemde Stellbewegung in Richtung des Bewegungspfeiles 12 aus.

In Fig.2b sind die Aktoren 1 bis 4 so angesteuert, dass sich für das Aktorsystem eine lineare Stellbewegung in Richtung des Bewegungspfeites 13 ergibt. Dazu ist Aktor 1 gestaucht, Aktor 2 neutral, Aktor 3 gedehnt und Aktor 4 neutral. Die erzeugte Bewegungskomponente befindet sich ebenfalls in der x-y-Ebene und steht lotrecht auf der in Fig.2a gezeigten Bewegungskomponente.

In Fig.2c sind die Aktoren 1 bis 4 so angesteuert, dass das Aktorsystem eine reine Rotationsbewegung im Sinne des Bewegungspfeiles 14 ausführt. Dazu ist Aktor 1 gestaucht, Aktor 2 gedehnt, Aktor 3 gestaucht und Aktor 4 gedehnt. Die Rotationsachse dieser erzeugten Bewegungskomponenete steht lotrecht auf der x-y-Ebene des Aktorsystems.

Die drei vorangehend zu den Figuren 2a bis 2c beschriebenen Bewegungskomponenten lassen sich durch eine entsprechende Ansteuerung beliebig kombinieren und spektral überlagern. Zur Aufrechterhaltung einer in den Aktoren wirkenden konstanten mechanischen Vorspannung, muss eine konstante elektrische Summenspannung bei der Ansteuerung eingehalten werden.

Abweichend zu den vorangehend beschriebenen Ausführungsbeispielen können über angepasste Ausgestaltungen und Anordnungen der Eckverbindungen 5 bis 8 die vier Aktoren 1 bis 4 auch in anderen Vielecken und Geometrien angeordnet sein, womit die erfindungsgemäße Lösung auf unterschiedliche konstruktive Anforderungen angepasst werden kann.

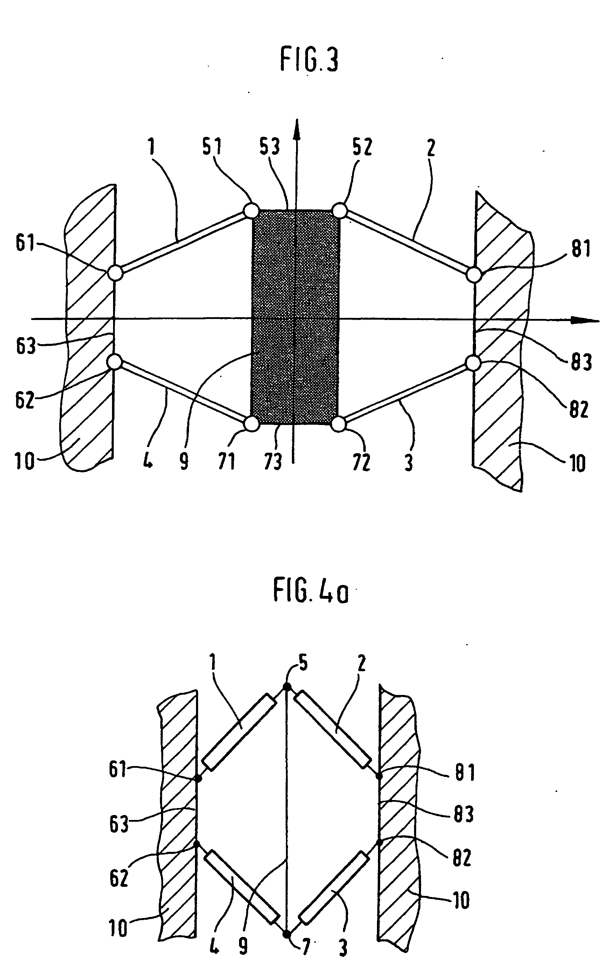

Fig.3 zeigt das erfindungsgemäße Aktorsystem in einer allgemeinen Ausführungsform, aus der sich vielfältige Varianten ableiten lassen.

In dieser Ausführungsform sind alle Eckverbindungen 5 bis 8 paarweise in Eckverbindungen 51 und 52, 61 und 62, 71 und 72 sowie 81 und 82 aufgetrennt. Jeweils zwischen zwei gegenüberliegenden Paaren von Eckverbindungen sind die aus dem vorangehend beschriebenen Ausführungsbeispiel bekannten starren Verbindungen 9 und 10 angeordnet, wobei die starre Verbindung 10 beispielsweise als ein umgebender Rahmen ausgebildet ist.

Die Eckverbindungen weisen jeweils auf der starren Verbindung 9 und auf der starren Verbindung 10 einen starren Abstand 53,63, 73 und 83 zueinander auf. Die Eckverbindungen selbst können in sich starr oder gelenkig ausgeführt sein und die beiden Abtriebe des Aktorsystems sind jeweils zwischen gegenüberliegenden Paaren von Eckverbindungen wirksam.

Nachstehend sind in einer beispielhaften Auswahl Ausführungsvarianten beschrieben, die aus der in Fig.3 gezeigten Ausführungsform ableitbar sind.

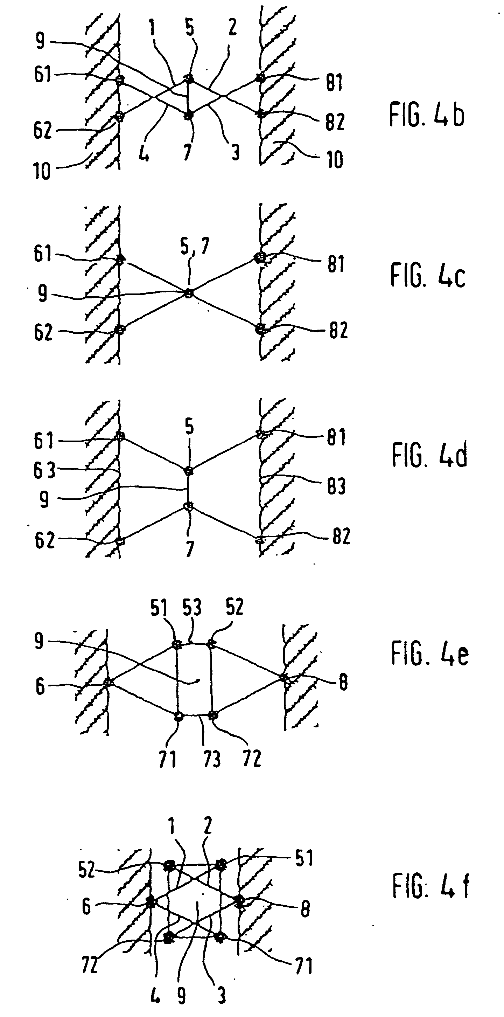

Fig.4a zeigt ein sechseckiges Aktorsystem. In diesem Aktorsystem sind in Abweichung zu dem in Fig.3 gezeigten Ausführungsbeispiel keine starren Abstände 53 und 73 auf der starren Verbindung 9 ausgebildet und die Eckverbindungen 51 und 52 sowie 71 und 72 sind jeweils durch eine einzige Eckverbindung 5 oder 7 ersetzt.

Fig.4b zeigt ebenfalls ein Aktorsystem, dass auf der starren Verbindung 9 keine starren Abstände 53 und 73 aufweist. Im Vergleich zu der vorangehend beschriebenen Variante sind die Eckverbindungen auf der starren Verbindung 10 so angeordnet, dass sich die Aktoren 1 und 4 sowie 2 und 3 jeweils überkreuzen. Durch eine derartige Anordnung der Eckverbindungen auf der starren Verbindung 10 kann die Einbauhöhe des Aktorsystems vorteilhaft verringert werden.

Fig.4c zeigt ein fünfeckiges Aktorsystem. Gegenüber dem in Fig.4a gezeigten Aktorsystem entfällt hier die starre Verbindung 9 und die Eckverbindungen 5 und 7 sind direkt starr oder gelenkig miteinander verbunden. Eine derartige Anordnung ist dann vorteilhaft, wenn für den Abtrieb an den Eckverbindungen 5 und 7 eine geringe Momentensteifigkeit benötigt wird. Eine solche Anordnung fällt jedoch nicht unter das vorliegende Schutzbegehren.

Fig.4d zeigt ein sechseckiges Aktorsystem ähnlich dem in Fig.4a gezeigten Aktorsystem. Abweichend dazu sind hier die Abstände 63 und 83 größer als der von der starren Verbindung 9 vorgegebene Abstand zwischen den Eckverbindungen 5 und 7.

Fig.4e zeigt ein sechseckiges Aktorsystem, in dem abweichend zu dem in Fig.3 gezeigten Ausführungsbeispiel die an der starren Verbingung 10 gelagerten Eckverbindungen nicht durch starre Abstände aufgetrennt sind.

Fig.4f zeigt ein sechseckiges Aktorsystem angelehnt an dem Ausführungsbeispiel gemäß Fig. 4e. Im Vergleich zu der vorangehend beschriebenen Variante sind die Eckverbindungen auf der starren Verbindung 9 so angeordnet, dass sich die Aktoren 1 und 4 sowie 2 und 3 jeweils überkreuzen. Durch eine derartige Anordnung der Eckverbindungen auf der starren Verbindung 9 kann die Einbaubreite des Aktorsystems vorteilhaft verringert werden.

Zu der vorangehend in Fig.4a bis Fig.4e gezeigten Auswahl von Ausführungsvarianten lassen sich von dem Fachmann durch - hier nicht gezeigte - weitere Variationen in den Anordnungen und Ausgestaltungungen der Eckverbindungen noch andere Alternativen für das erfindungsgemäße Aktorsystem ableiten. Wesentlich dabei ist, dass die gegenüberliegenden Eckverbindungen - oder Eckverbindungspaare - , der in einem geschlossenen Vieleck angeordneten Aktoren durch starre Verbindungungen 9 und 10 auf konstantem Abstand zueinander gehalten werden.

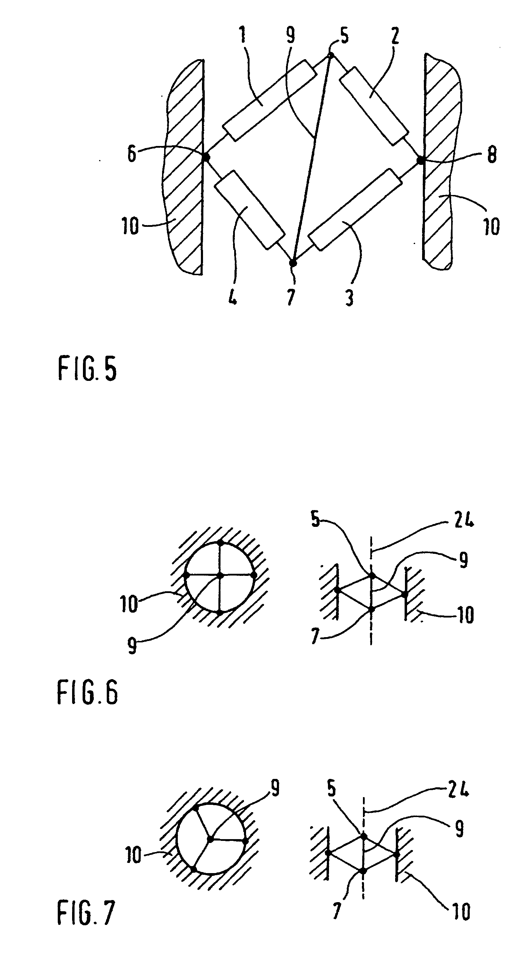

Eine weitere Möglichkeit für alternative Ausführungsformen des erfindungsgemäßen Aktorsystems besteht darin, dass die gegenüberliegenden Aktoren 1 und 3 sowie 2 und 4 paarweise unterschiedlich ausgebildet sind. In dem in Fig.5 gezeigtem Ausführungsbeispiel sind beispielsweise die Aktoren 1 und 3 länger ausgebildet als die Aktoren 2 und 4. Die unterschiedliche Ausbildung der Aktorenpaare kann, wie in Fig.5 gezeigt, die Abmessung betreffen, sie kann aber auch das Weg- und Kraftvermögen der Aktoren betreffen. Grundsätzlich lässt sich dieses Prinzip der unterschiedlichen Aktorenpaare auf alle vorgenannten Ausführungsformen übertragen.

Abweichend zu den bisher beschriebenen Ausführungsformen, in denen die beiden Abtriebe des Aktorsystems in derselben Ebene wirken, besteht auch die Möglichkeit, die Aktoren rotationsymmetrisch um eine Abtriebsachse 24 anzuordnen. Fig.6 und Fig.7 zeigen derartige Ausführungsformen.

In den Figuren ist jeweils die Draufsicht und geschnitte Seitenansicht eines derartigen Systems gezeigt. Die starre Verbindung 10 ist bespielsweise als ein Hohlzylinder ausgebildet und die starre Verbindung 9 erstreckt sich in der Längsachse dieses Hohlzylinders. Anstelle des zylindrischen Rahmens sind auch andere Ausbildungen des Rahmens denkbar, die für die Aktoren eine rotationssymmetrische Anordnung um die Abtriebsachse 24 ermöglichen, z. B. ein quadratischer Rahmen. Alle anderen vorangehend beschriebenen Ausführungsformen lassen sich auf ein derartig rotationssymmetrisches System übertragen.

Das Aktorsystem von Fig.6 besteht aus zwei Aktoranordnungen mit je vier Aktoren, die in den Hohlzylinder um 90° zueinander versetzt integriert sind; das Aktorsystem der Fig.7 besteht aus drei hälftigen Aktoranordnungen von je zwei Aktoren, die in dem Hohlzylinder um 120° zueinander versetzt integriert sind.

Die Aktoranordnungen wirken einerseits auf den an den Rahmen gekoppelten Abtrieb und andererseits gemeinsam auf den zweiten Abtrieb des Aktorsystems in der Längsachse des Hohlzylinders, der an die Eckverbindungen 5 und 7 gekoppelt ist, zwischen denen die starre Verbindung 9 angeordnet ist.

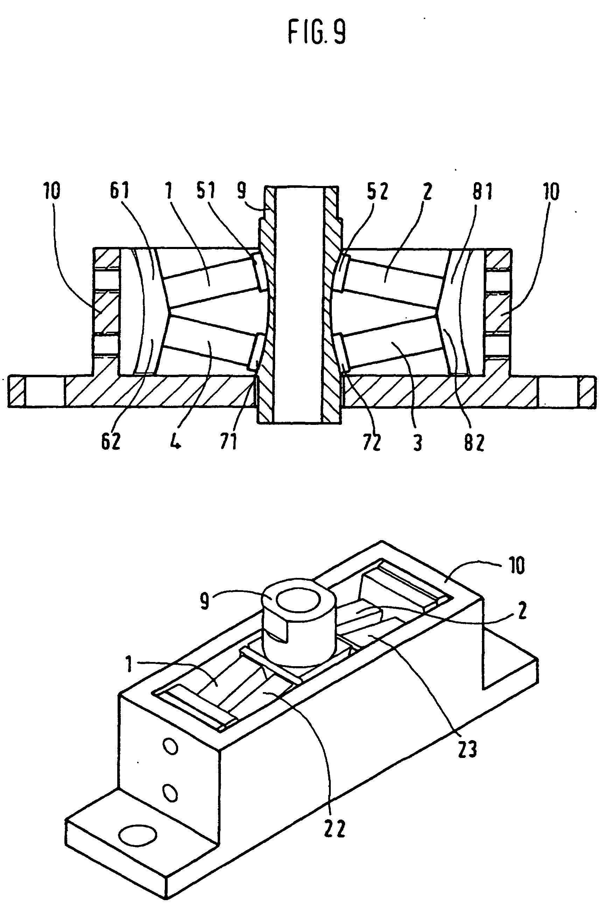

Fig.8 zeigt eine elektrische Steuerschaltung für ein erfindungsgemäßes Aktorsystem, das beispielsweise als ein Gegenspieler eingesetzt ist und aus Piezostapel-Aktoren besteht. Diese besitzen elektrische Eigenschaften wie ein spannungsgesteuerter Kondensator und sind mit einem dementsprechenden Ersatzschaltbild in Fig.8 dargestellt.

Die Aktoren 1 bis 4 sind elektrisch in Reihe geschaltet. Dabei ist die Reihenfolge so gewählt, dass zwei gegenüberliegende Aktoren direkt hintereinander-geschaltet sind; beispielsweise in der Reihenfolge 4-2-3-1. Die hintereinander-geschatteteten Aktoren sind von einer Gleichspannungsquelle 15 gleichmäßig beaufschlagt.

Zur individuellen Ansteuerung der Aktoren ist bei den einzelnen Aktoren der Gleichspannungsabfall von einer Wechselspannung überlagert, die aus einer von drei Wechselspannungsquellen 16, 17 und 18 jeweils in einen der Verbindungspunkte 19, 20 und 21 zwischen den Aktoren der Reihenschaltung einspeist ist. Die Wechselspannungsquellen 16 und 18 liegen jeweils über den Aktor 1 oder 2 an; Wechselspannungsquelle 17 liegt über die beiden Aktoren 1 und 3 an.

Zur Erzeugung einer Schwingung des Aktorsystems in Richtung der Bewegungskomponente gemäß Fig.2a speist die Wechselspannungsquelle 18 in den Verbindungspunkt 21 bei abgeschalteter Wechselspannungsquelle 16 und elektrisch überbrückter Wechselspannungsquelle 17. Die Aktoren 4 und 2 werden im Takt der Wechselspannung abwechselnd gestaucht und gedehnt; die Aktoren 1 und 3 sind nur von der zugnrndeliegenden Gleichspannnung belastet und führen keine Schwingungsbewegung aus. Dementsprechend führt eine zusätzliche Einspeisung allein durch die Wechselspannungsquelle 16 bei abgeschalteten Wechselspannungsquellen 17 und 18 zu einer Schwingung in der Richtung der Bewegungskomponente gemäß Fig.2b.

Die Einspeisung aller drei Wechselspannungsquellen führt zu einer schwingenden Rotationsbewegung in Richtung der Bewegungskomponente gemäß Fig. 2c. Die Wechselspannungen werden dazu so eingespeist, dass sich gegenüberliegende Aktoren des Aktorsystems gleichphasig dehnen oder stauchen und zwischen den gleichphasigen Schwingungen der beiden Aktorpaare Gegenphasigkeit vorliegt.

Die vorangehend beschriebene Steuerschaltung für das Aktorsystem ist nur beispielhaft und für ein Aktorsystem angegeben, das als Schwingungstilger wirkt. Der Fachmann kann diese Steuerschaltung, ohne erfinderisch tätig werden zu müssen, beliebig für andere Verwendungen des Aktorsystems abwandeln. Entscheidend für die Auslegung von altemativen Steuerschattungen ist die Möglichkeit zur erfindungsgemäßen Erzeugung der Bewegungskomponenten gemäß Fig. 2a bis Fig. 2c und die Möglichkeit, diese Bewegungskomponenten durch eine entsprechende Steuerung in beliebiger Weise kombinieren zu können.

Eine mögliche Ausgestaltung der Steuerschaltung besteht darin, dass die Versorgungsspannung der Wechselspannungsquellen 16 und 18 von der übergeordneten Wechselspannungsquelle 17 geliefert wird. Damit ist die Summenspannung über die vier Aktoren zwangsläufig immer konstant und es ist keine unerwünschte Über- oder Untersteuerung der Aktoren durch die untergeordneten Wechselspannungsverstärker möglich. Ein weiterer Vorteil dieser Ausgestaltung liegt darin, dass eine Rotationsbewegung gemäß Fig. 2c durch eine alleinige Ansteuerung der Wechselspannungsquelle 17 erzeugt werden kann. Die Wechselspannungs quellen 16 und 18 dürfen zur Erzielung dieses Vorteils nur als Proportionalverstärker und nicht als Spannungsverstärker ausgebildet sein.

Eine weitere vorteilhafte Ausgestaltung der Steuerschaltung betrifft die Steuerbarkeit der mit der Gleichspannungsquelle 15 erzeugten Offsetspannung in Abhängigkeit von den vorliegenden Betriebsbedingungen. Werden nur geringe Aktorhübe benötigt, so kann die Offsetspannung auf einen geringeren Wert eingestellt werden. Dadurch lässt sich bei einer Verwendung von Piezoaktoren die Lebensdauer der Aktoren erhöhen.

In der in Fig.9 gezeigten konstruktiven Anwendung sind in einer parallel wirkenden Anordnung zwei erfindungsgemäße Aktorensysteme verwendet. In der geschnittenen Vorderansicht sind vier Aktoren 1 bis 4 von einem der beiden Aktorensysteme erkennbar; die perspektivische Ansicht zeigt nur die oberen Aktoren 1,2,22 und 23 der beiden parallelen Aktorsysteme; die unteren Aktoren sind in dieser Ansicht nicht erkennbar, da sie sich in einem Gehäuse befinden, das hier die Funktion der starren Verbindung 10 übernimmt.

Das Gehäuse kann optional mit einem Deckel geschlossen und mit Öl gefüllt sein, womit vorteilhaft eine gute Kühlung und hohe elektrische Durchschlagsfestigkeit für die Aktoren erreichbar ist. Die bewegte Abtriebshülse wird dabei mit Dichtungsringen zum Gehäuse abgedichtet.

Charakteristisch für diese konstruktive Ausführung ist neben der voranstehend genannten Parallelwirkung die Gestaltung der Eckverbindungen. Die Eckverbindungen 61, 62 und 81, 82 weisen zwischen den Aktoren einen spitzen Winkel und die Eckverbindungen 51, 52 und 71, 72 einen stumpfen Winkel auf. Diese Winkelgeometrie führt zu einer verstärkten Bwegungskomponente in Richtung der Längsachse der als Abtriebshülse ausgebildeten starren Verbindung 9. Die Eckverbindungen dieser konstruktiven Ausführung sind bezüglich der Aktoren starr und nicht als Gelenkverbindungen ausgebildet; sie sind aber gelenkig über Wälzlagerschalen an die starren Verbindungen 9 und 10 angebunden.

Die Begegungskomponenten gemäß den Figuren Fig. 2a bis Fig. 2c und daraus kombinierte Stellbewegungen lassen sich durch eine entsprechende individuelle elektrische Steuerung der Aktoren in den beiden Aktorsystemen erzeugen; jeweils parallel angeordnete Aktoren der beiden Aktorsysteme müssen gleichartig angesteuert werden. Konstruktiv bedingten Verstärkungen infolge der Winkelgeometrien wirken sich auch auf die erzielbaren kombinierten Stellbewegungen aus. Alle Bewegungskomponenten wirken in der x-y-Ebene der Aktoren, die sich parallel zu den Anordnungsebenen der Aktoren erstreckt.

## Patentansprüche

1. Aktorsystem, bestehend aus mehreren zusammenwirkenden Aktoren (1 bis 4), wobei
- die Aktoren (1 bis 4) mit ihren Endpunkten über Eckverbindungen (5 bis 8) derart miteinander verbunden sind, dass sie eine geschlossene vieleckige Anordnung bilden;
- jeweils gegenüberliegende Eckverbindungen (5 bis 8) mittels starrer Verbindungen (9,10) auf konstantem Abstand zueinander gehalten sind;
- die starren Verbindungen (9, 10) zueinander frei beweglich und mit den jeweiligen Eckverbindungen (5, 7 bzw. 6, 8) gelenkig verbunden sind; und
- das Aktorsystem mit den jeweils auf konstantem Abstand gehaltenen Eckverbindungen (5, 7 bzw. 6, 8) zwei Abtriebe bildet;
**dadurch gekennzeichnet, dass**
die Aktoren (1 bis 4) elektrisch in Reihe geschaltet sind und von einer Gleichspannungsquelle (15) gleichmäßig beaufschlagt sind; wobei zur Realisierung kombinierter Stellbewegungen, die sich aus linearen und rotierenden Bewegungskomponenten zusammensetzen, jedem einzelnen Aktor (1 bis 4) eine Wechselspannung zu zu dessen individueller Steuerung überlagert ist und die elektrische Steuerung der Aktoren nach dem Gegenspielersystem ausgelegt ist.

2. Aktorsystem nach Patentanspruch 1, **dadurch gekennzeichnet, dass** die Eckverbindungen (5 bis 8) jeweils durch ein Paar von Eckverbindungen (51, 52...bis 81, 82) ersetzt sind, die jeweils einen starren Abstand (53, 63, 73, 83) zueinander aufweisen.

3. Aktorsystem nach einem der Patentansprüche 1 bis 2, **dadurch gekennzeichnet, dass** die Eckverbindungen (5, 51, 52 ...bis 8, 81, 82) als starre oder gelenkige Winkelanordnungen ausgebildet sind.

4. Aktorsystem nach einem der Patentansprüche 1 bis 3, **dadurch gekennzeichnet, dass** die starren Verbindungen (9, 10) als Stangen und/oder als Rahmen ausgebildet sind.

5. Aktorsystem nach einem der Patentansprüche 1 bis 4, **dadurch gekennzeichnet, dass** die Aktoren (1 bis 4) als Piezostapel- oder als Piezofaser-Aktoren ausgebildet sind.

6. Aktorsystem nach einem der Patentansprüche 1 bis 5, **dadurch gekennzeichnet, dass** die Schenkel der Eckverbindungen (5, 51, 52 ......bis 8, 81, 82) jeweils in demselben Winkel zueinander angeordnet sind.

7. Aktorsystem nach einem der Patentansprüche 1 bis 5, **dadurch gekennzeichnet, dass** gegenüberliegende Eckverbindungen als spitz- und stumpfwinklige Winkelanordnungen ausgeführt sind.

8. Aktorsystem nach einem der Patentansprüche 1 bis 6, **dadurch gekennzeichnet, dass** jeweils zwei gegenüberliegende Aktoren (1 und 3 sowie 2 und 4) gleich und dass diese Aktorenpaare zueinander unterschiedlich ausgebildet sind.

9. Aktorsystem nach einem der Patentansprüche 1 bis 7, **dadurch gekennzeichnet, dass** die Aktoren (1 bis 4) rotationssymmetrisch um eine Abtriebsachse (24) angeordnet sind.

10. Aktorsystem nach Patentanspruch 9, **dadurch gekennzeichnet, dass** die Gleichspannungsquelle (15) steuerbar ist und dass das Aktorsystem zeitweise mit geringerer Offsetspannung beaufschlagbar ist.

11. Aktorsystem nach Patentanspruch 9 oder 10, **dadurch gekennzeichnet, dass** die elektrische Steuerung der Aktoren mit einer übergeordneten Wechselspannungsquelle (17) und zwei untergeordneten Wechselspannungsquellen (16, 18) erfolgt.

12. Aktorsystem nach Patentanspruch 12, **dadurch gekennzeichnet, dass** die Versorgungsspannung der untergeordneten Wechselspannungsquellen (16, 18) von der übergeordneten Wechselspannungsquelle (17) abgegriffen wird.

## Claims

1. Actuator system, consisting of a plurality of cooperating actuators (1 to 4), in which
- the actuators (1 to 4) are connected together with their end points by way of corner connections (5 to 8) in such a way that they form a closed polygonal arrangement;
- respectively opposing corner connections (5 to 8) are held at a constant distance from each other by means of rigid connections (9, 10);
- the rigid connections (9, 10) are freely movable in relation to each other and are connected in an articulated manner to the respective corner connections (5, 7 and 6, 8 respectively); and
- the actuator system forms two output drives with the corner connections (5, 7 and 6, 8 respectively) in each case held at a constant distance,
**characterised in that** the actuators (1 to 4) are electrically connected in series and a direct-voltage source (15) is uniformly applied to them;
wherein, in order to realize combined actuating movements composed of linear and rotating movement components, an alternating voltage is superimposed upon each individual actuator (1 to 4) for the individual control thereof, and the electrical control of the actuators is designed in accordance with the counterpart system.

2. Actuator system according to claim 1, **characterised in that** the corner connections (5 to 8) are each replaced by a pair of corner connections (51, 52 ... to 81, 82) that are each at a fixed distance (53, 63, 73, 83) from each other.

3. Actuator system according to one of claims 1 to 2, **characterised in that** the corner connections (5, 51, 52
... to 8, 81, 82) are formed as rigid or articulated angular arrangements.

4. Actuator system according to one of claims 1 to 3, **characterised in that** the rigid connections (9, 10) are formed as rods and/or as frames.

5. Actuator system according to one of claims 1 to 4, **characterised in that** the actuators (1 to 4) are formed as piezo-stack or piezo-fibre actuators.

6. Actuator system according to one of claims 1 to 5, **characterised in that** the legs of the corner connections (5, 51, 52 ... to 8, 81, 82) are each arranged at the same angle to each other.

7. Actuator system according to one of claims 1 to 5, **characterised in that** opposing corner connections are constructed as acute-angled and obtuse-angled angular arrangements.

8. Actuator system according to one of claims 1 to 6, **characterised in that** in each case two opposing actuators (1 and 3 and also 2 and 4) are formed so as to be identical, and **in that** these pairs of actuators are formed differently from each other.

9. Actuator system according to one of claims 1 to 7, **characterised in that** the actuators (1 to 4) are arranged in a rotationally symmetrical manner about an output-drive axis (24).

10. Actuator system according to claim 9, **characterised in that** the direct-voltage source (15) is controllable, and **in that** for a time less offset voltage can be applied to the actuator system.

11. Actuator system according to claim 9 or 10, **characterised in that** the electrical control of the actuators is effected with a higher-order alternating-voltage source (17) and two subordinate alternating-voltage sources (16, 18).

12. Actuator system according to claim 12, **characterised in that** the supply voltage of the subordinate alternating-voltage sources (16, 18) is tapped from the higher-order alternating-voltage source (17).

## Revendications

1. Système d'actionneurs composé de plusieurs actionneurs (1 à 4) en interaction, dans lequel
- les actionneurs (1 à 4) sont reliés par leurs extrémités au moyen de liaisons d'angle (5 à 8) de telle manière qu'ils forment un arrangement polygonal fermé,
- des liaisons d'angle (5 à 8) opposées sont respectivement maintenues à distance constante l'une par rapport à l'autre à l'aide de liaisons rigides (9, 10),
- les liaisons rigides (9, 10) se déplacent librement l'une par rapport à l'autre et sont reliées par articulation à chacune des liaisons d'angle (5, 7 ou 6, 8) concernées, et
- le système d'actionneurs, muni des liaisons d'angle (5, 7 ou 6, 8) respectives maintenues à distance constante, forme deux entraînements,
**caractérisé en ce que** les actionneurs (1 à 4) sont électriquement montés en série et sont alimentés régulièrement par une source de tension continue (15), pour obtenir des mouvements de réglage combinés formés de composantes de mouvement linéaires et rotatives, une tension alternative est alors superposée à la commande individuelle de chacun des actionneurs (1 à 4) et la commande électrique des actionneurs est conçue d'après le système antagoniste.

2. Système d'actionneurs selon la revendication 1,
**caractérisé en ce que** les liaisons d'angle (5 à 8) sont respectivement remplacées par une paire de liaisons d'angle (51, 52 à 81, 82) qui ont chacune une distance (53, 63, 73, 83) rigide par rapport à l'autre.

3. Système d'actionneurs selon l'une des revendications 1 ou 2,
**caractérisé en ce que** les liaisons d'angle (5, 51, 52 à 8, 81, 82) sont des arrangements angulaires rigides ou articulées.

4. Système d'actionneurs selon l'une des revendications 1 à 3,
**caractérisé en ce que** les liaisons rigides (9, 10) sont des barres et/ou des cadres.

5. Système d'actionneurs selon l'une des revendications 1 à 4,
**caractérisé en ce que** les actionneurs (1 à 4) sont des actionneurs à empilement piézoélectrique ou des actionneurs à fibres piézoélectriques.

6. Système d'actionneurs selon l'une des revendications 1 à 5,
**caractérisé en ce que** les côtés des liaisons d'angle (5, 51, 52 à 8, 81, 82) ont chacun le même angle les uns par rapport aux autres.

7. Système d'actionneurs selon l'une des revendications 1 à 5,
**caractérisé en ce que** des liaisons d'angle opposées sont des arrangements à angles aigus ou obtus.

8. Système d'actionneurs selon l'une des revendications 1 à 6,
**caractérisé en ce que** deux actionneurs (1 et 3 ainsi que 2 et 4) opposés sont identiques et ces paires d'actionneurs sont conçues différemment l'une de l'autre.

9. Système d'actionneurs selon l'une des revendications 1 à 7,
**caractérisé en ce que** les actionneurs (1 à 4) sont disposés en symétrie de rotation autour d'un axe d'entraînement (24).

10. Système d'actionneurs selon la revendication 9,
**caractérisé en ce que** la source de tension continue (15) est réglable et le système d'actionneurs peut être alimenté temporairement par une tension de décalage faible.

11. Système d'actionneurs selon la revendication 9 ou 10,
**caractérisé en ce que** la commande électrique des actionneurs est réalisée par une source de tension alternative (17) de niveau supérieur et par deux sources de tension alternative (16, 18) de niveau inférieur.

12. Système d'actionneurs selon la revendication 11,
**caractérisé en ce que** la tension d'alimentation des sources de tension alternative (16, 18) de niveau inférieur est prélevée de la source de tension alternative (17) de niveau supérieur.
